# EUROPÄISCHE PATENTSCHRIFT

(11) **EP 1 530 525 B1**
(45) Veröffentlichungstag und Bekanntmachung des Hinweises auf die Patenterteilung: **28.05.2008**
(21) Anmeldenummer: 04725053.5
(22) Anmeldetag: 01.04.2004
(51) Int. Cl.: B60R 21/015, G06T 7/00, G06K 9/00

(54) **VERFAHREN ZUR BESTIMMUNG DER AKTUELLEN KOPFPOSITION VON FAHRZEUGINSASSEN**
METHOD FOR DETERMINING THE CURRENT POSITION OF THE HEADS OF VEHICLE OCCUPANTS
PROCEDE POUR DETERMINER LA POSITION PRESENTE DE LA TETE DE PASSAGERS DE VEHICULES

(30) Priorität: 13.05.2003 DE 10321506
(43) Veröffentlichungstag der Anmeldung: 18.05.2005
(73) Patentinhaber: Continental Automotive GmbH, 30165 Hannover (DE)
(72) Erfinder: ERTL, Ludwig, 93057 Regensburg (DE); KÖHLER, Thorsten, 88131 Lindau (DE)
(86) Internationale Anmeldenummer: PCT/EP2004/050411
(87) Internationale Veröffentlichungsnummer: WO 2004/101325

(56) Entgegenhaltungen:
- EP-A- 1 278 159
- US-A1- 2003 001 368
- US-A1- 2003 079 929
- US-A1- 2003 081 814
- DEVY M ET AL: "Detection and classification of passenger seat occupancy using stereovision" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, 3. Oktober 2000 (2000-10-03), Seiten 714-719, XP010529022 ISBN: 0-7803-6363-9

## Beschreibung

Die vorliegende Erfindung betrifft ein Verfahren zur Bestimmung der aktuellen Position (A, B, C, D ...) eines sich auf eine dynamische Abschaltzone vor einem Airbagmodul hin bewegenden Kopfes eines Insassen im Innenraum eines Kraftfahrzeuges.

Zukünftige Rückhaltesysteme in Kraftfahrzeugen werden die aktuelle Kopfposition der Fahrzeuginsassen berücksichtigen müssen, um eine optimale Schutzwirkung während der Airbagauslösung zu erzielen. Diese Entwicklungen werden durch Gesetzgebungsinitiativen zusätzlich getrieben, wie beispielsweise in den USA durch die Gesetzgebungsinitiative FMVSS 208.

Wesentlicher Bestandteil derartiger Gesetzgebung ist eine automatische dynamische Abschaltzone vor dem Airbagmodul (im Folgenden COOP "Critical Out Of Position" Zone genannt). Typischerweise befindet sich die Grenze dieser Zone in einem Abstand von etwa 10 cm vom Airbagmodul in Richtung des Insassen. Wenn der Fahrzeuginsasse während eines Unfallgeschehens (z. B. in Folge einer Vollbremsung) mit seinem Kopf in Richtung des Airbagmoduls geschleudert wird, besagt die Gesetzgebung, dass der Airbag vor dem Eindringen des Kopfes oder Torso in die COOP-Zone abgeschaltet werden muss. Entscheidend ist dabei der Abstand des dem Airbag zugewandten Teil des Kopfes (im Allgemeinen das Gesicht) bzw. Torso (im Allgemeinen die Brust) zum Airbagmodul.

Ein wesentliches Kriterium für die Optimierung dieser Funktion ist dabei die Größe der sog. Umschaltzone. Auf der einen Seite muss der Airbag vor dem Eindringen des Kopfes deaktiviert werden, auf der anderen Seite soll dem Insassen bei ausreichendem Abstand zum Airbagmodul aber kein Schutzpoten tial vorenthalten werden. Somit sollte die Umschaltzone so klein wie möglich gewählt werden. Die Größe der Umschaltzone liegt typischerweise bei einigen wenigen Zentimetern.

Zur Messung des Abstandes des Kopfes des Insassen zum Airbagmodul werden derzeit berührungsfreie Systeme und hier in erster Linie optische Systeme entwickelt. Bei diesen optischen Systemen handelt es sich vorzugsweise um 3D-Kameras, die nach dem stereoskopischen Verfahren, nach dem Lichtbüschelverfahren oder nachdem TOF (Time Of Fight) funktionieren.

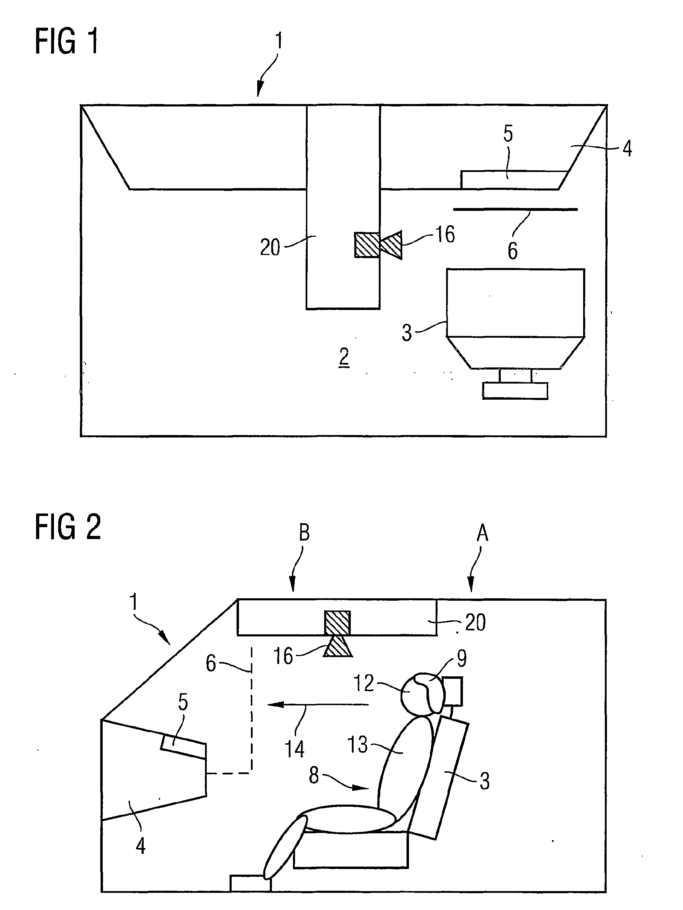

Derartige Bilderfassungseinheiten werden typischerweise oben im Dachmodul zwischen den Fahrzeugsitzen eingebaut (vgl. dazu auch unten Fig. 1 und 2). Der Vorteil dieser Einbauposition besteht darin, dass die Kamera unter normalen Umständen nicht leicht verdeckt werden kann, wie beispielsweise durch Zeitung lesende Insassen. Nachteilig jedoch ist, dass die Kamera beim Eindringen des Kopfes in die COOP-Zone den dem Airbagmodul zugewandten Teil des Kopfes, d.h. im Allgemeinen das Gesicht, nicht sehen kann. Die Bilderfassungseinheit schaut in diesem Fall auf den Hinterkopf des Insassen.

Es ist bekannt, dieses Problem durch die Annahme einer mittleren Kopfgröße zu lösen. Diese Annahme ist jedoch bei beispielsweise ausladender Haarpracht, einer Kopfbedeckung oder dergleichen mit nicht unerheblichen Fehlern behaftet. In diesen Fällen trifft die Annahme nicht mehr zu. Somit muss die Umschaltzone so groß gewählt werden, dass die meisten Szenarien angesichts dieser Unsicherheit abgedeckt werden.

Fig. 3 verdeutlicht diesen Sachverhalt. In Kopfposition A (normal sitzend) sieht die Kamera das Gesicht des Insassen, jedoch nicht die Haare. In Kopfposition B (Gesicht an COOP Bereichsgrenze) schaut die Kamera auf den Hinterkopf des Insassen und sieht nicht mehr das Gesicht sondern die Haare des Insassen.

Fig. 4 zeigt, dass schon eine geringfügig ausladendere Frisur unter Annahme einer mittleren Kopfgröße dazu führen kann, dass die Kamera noch eine Position außerhalb von COOP ermittelt, obwohl der Kopf bereits in die COOP-Zone eingedrungen ist.

EP-A-1 278 159 wird als nächstliegender Stand der Technik betrachtet.

Aufgabe der Erfindung ist, ein verbessertes - die vorstehenden Nachteile vermeidendes - Verfahren nebst Vorrichtung zur exakten Bestimmung der Kopfposition von Fahrzeuginsassen anzugeben. Insbesondere soll mit der Erfindung eine möglichst kleine Umschaltzone realisierbar sein, um dem Insassen bei ausreichenden Abstand zum Airbagmodul kein Schutzpotential vorzuenthalten.

Diese Aufgabe wird durch die unabhängigen Patentansprüche gelöst. Vorteilhafte Aus- und Weiterbildungen, welche einzeln oder in Kombination miteinander eingesetzt werden können, sind Gegenstand der abhängigen Ansprüche.

Ein erstes Verfahren nach der Erfindung zur Bestimmung der exakten Position (A, B, C, D ...) eines sich auf eine automatische dynamische Abschaltzone vor einem Airbagmodul hin bewegenden Kopfes eines Insassen im Innenraum eines Kraftfahrzeuges, unter Verwendung einer Bilderfassungseinheit mit einer idealen Blickrichtung, die im wesentlichen senkrecht zu einer idealen Bewegungsrichtung des Insassen verläuft, zeichnet sich dadurch aus, dass mittels der Bilderfassungseinheit zumindest zyklisch eine den Insassen umfassende Bildszene, d.h. ein den Insassen umfassender Bildbereich, im Innenraum des Kraftfahrzeuges aufgenommen und Bildinformationen des Insassen erfasst werden; im jeweils aktuellen Szenenbild sowohl die Position des geometrischen Mittelpunktes des Kopfes als auch die scheinbare Größe des Kopfes in Bewegungsrichtung ermittelt, insb. vermessen, werden; die jeweils aktuellen Blickrichtungen der Bilderfassungseinheit als ein Vektor definiert werden, welche von einer definierten Position der Bilderfassungseinheit zu der jeweils aktuellen Position des geometrischen Mittelpunktes des Kopfes zeigen; die jeweils aktuellen Winkel α zwischen der idealen Blickrichtung und den aktuellen Blickrichtungen der Bilderfassungseinheit berechnet werden; die jeweils aktuellen Werte für Winkel α und scheinbare Größe des Kopfes in einem Speicher abgelegt werden; und als Größe des Kopfes immer derjenige Wert aus dem Speicher angenommen wird, bei dem der Absolutbetrag der Differenz von Winkel α und 0° minimal war.

Im Gegensatz zum Stand der Technik wird also statt einer mittleren Kopfgröße eine scheinbare und damit letztlich reale Kopfgröße ermittelt. Aus der Menge der so ermittelten Kopfgrößen wird dann während der z.B. parallel laufenden Positionsberechnungen immer diejenige Kopfgröße ausgewählt und der Berechnung zugrunde gelegt, welche der tatsächlichen Kopfgröße am nächsten kommt, ja im besten Fall dieser sogar entsprechen kann. Indem also eine sich an der Realität orientierende Kopfgröße der aktuellen Positionsbestimmung vor dem Airbagmodul zugrundegelegt wird, ist in vorteilhafter Weise eine weit aus exaktere Positionsbestimmung als im Stand der Technik vornehmbar und damit eine deutlich kleiner dimensionierte Umschaltzone realisierbar, womit dem Fahrzeuginsassen ein erhöhtes Schutzpotential bereitgestellt ist.

Die vorliegende Erfindung betrifft auch ein Verfahren zur Bestimmung der exakten Position (A, B, C, D, ...) eines sich auf eine automatische dynamische Abschaltzone vor einem Airbagmodul hin bewegenden Kopfes eines Insassen im Innenraum eines Kraftfahrzeuges, unter Verwendung einer Bilderfassungseinheit mit einer idealen Blickrichtung, die im-wesentlichen senkrecht zu einer idealen Bewegungsrichtung des Insassen verläuft, bei dem mittels der Bilderfassungseinheit zumindest zyklisch eine den Insassen umfassende Bildszene, d.h. ein den Insassen umfassender Bildbereich, im Innenraum des Kraftfahrzeuges aufgenommen und Bildinformationen des Insassen erfasst werden; im jeweils aktuellen Szenenbild sowohl die Position des geometrischen Mittelpunktes des Kopfes als auch die scheinbare Größe des Kopfes in Bewegungsrichtung vermessen werden; die jeweils aktuellen Blickrichtungen der Bilderfassungseinheit als ein Vektor definiert werden, welche von einer definierten Position der Bilderfassungseinheit zu der jeweils aktuellen Position des geometrischen Mittelpunktes des Kopfes zeigen; die jeweils aktuellen Winkel β zwischen der idealen Bewegungsrichtung des Kopfes und den aktuellen Blickrichtungen der Bilderfassungseinheit berechnet werden; die jeweils aktuellen Werte für Winkel β und scheinbare Größe des Kopfes in einem Speicher abgelegt werden; und bei dem als Größe des Kopfes immer derjenige Wert aus dem Speicher angenommen wird, bei dem der Absolutbetrag der Differenz von Winkel β und 90° minimal war. Auch dieses Verfahren weist die vorgenannten Vorteile auf.

In einer bevorzugten Ausgestaltung der Erfindung ist die Bilderfassungseinheit eine 3D-Kamera, die nach dem stereoskopischen Verfahren, nach dem Lichtbüschelverfahren, nach dem Time-of-Flight-Verfahren oder einem anderen gleichermaßen geeigneten Verfahren arbeitet. Der Einsatz einer 3D-Kamera erlaubt in vorteilhafter Weise, insb. in Hinblick auf das zuletzt genannte erfindungsgemäße Verfahren, eine von idealen Bewegungs- und/oder Blickrichtungen losgelöste aktuelle Positionsbestimmung unter Zugrundelegung tatsächlicher Bewegungsvektoren im dreidimensionalen Raum.

Anstatt von einer idealen Bewegungsrichtung des Kopfes ausgehend eine Positionsbestimmung durchzuführen wird erfindungsgemäß bevorzugt daher vorgeschlagen, dass der jeweils aktuelle Winkel β zwischen einem aktuellen tatsächlichen Bewegungsvektor des Kopfes und dem aktuellen Blickrichtungsvektor der Bilderfassungseinheit berechnet wird. Dies fördert in vorteilhafter Weise die Robustheit des erfindungsgemäßen Verfahrens auch bei seitlich ausgerichteten Sitzhaltungen eines Insassen, wie dies beispielsweise beim Blick aus dem Seitenfenster oder dergleichen für gewöhnlich auftritt.

Indem vorzugsweise der jeweils letzte bzw. vorhergehende Wert für die Position des geometrischen Mittelpunktes des Kopfes gespeichert wird, kann in vorteilhafter Weise der jeweils aktuelle Bewegungsvektor aus der gespeicherten letzten und der aktuellen 3-dimensionalen Position des Kopfes einfach berechnet werden.

Erfindungsgemäß bevorzugt wird der definierten Position der Bilderfassungseinheit der Mittelpunkt einer Objektivöffnung der Bilderfassungseinheit, im Fall der Stereo-Kamera beispielsweise das linke Objektiv, zugrunde gelegt.

In einer weiteren bevorzugten Ausgestaltung der Erfindung nimmt die Bilderfassungseinheit kontinuierlich Bilder der interessierenden Szene auf, zumindest wenigstens 25 Bilder pro Sekunde, insbesondere wenigstens 30 Bilder pro Sekunde, vorzugsweise wenigstens 35 Bilder pro Sekunde, womit in vorteilhafter Weise faktisch Filmgeschwindigkeiten, also eine online Betrachtung, realisiert werden.

Die Größe des Speichers ist vorzugsweise so dimensioniert, dass zumindest sämtliche Messwerte einer langsamen Kopfbewegung von einer ersten Kopfposition (A), d.h. einer Ausgangslage, bis zur interessierenden zweiten Kopfposition (B), nämlich der Gesichtsposition an der COOP-Bereichsgrenze, gespeichert werden können.

In einer zweckmäßigen Ausgestaltung der Erfindung ist der Speicher ein Ringpuffer, welcher zunächst gefüllt und ab dann immer der älteste Wert durch den aktuellen Wert ersetzt wird.

Es hat sich auch als vorteilhaft erwiesen, wenn die Aufnahmen der Kopfbewegung durch Filter wie Kalman-Filter und/oder Bewegungsmodelle gefiltert wird.

Ausdrücklich sei darauf hingewiesen, dass mittels der Bilderfassungseinheit an Stelle der Kopfpositionsbestimmung frei lich auch ein anderes geeignetes Körperteil eines Insassen der Positionsberechnung zugrunde gelegt werden kann wie insbesondere die Größe des Torsos des Insassen im Kraftfahrzeug.

In einer weiteren bevorzugten Ausgestaltung der Erfindung wird vorgeschlagen, verschiedene Ansichten des Insassen zu einer 3D-Gesamtansicht der Person zu kombinieren. Dies erlaubt in vorteilhafter Weise beispielsweise eine Nachbildung der Vorderseite bzw. dessen Gesichtsprofil des Insassen vor der COOP-Begrenzungsebene aus der Gesamtansicht und damit eine exaktere Berechnung dessen Abstandes zur Abschaltzone bzw. zum Airbagmodul als im Stand der Technik.

Der Vollständigkeit halber sei erwähnt, dass die Erfindung freilich auch eine zum Verfahren korrespondierende Vorrichtung zur Bestimmung der aktuellen Position (A, B, C, D, ...) eines sich auf eine automatische dynamische Abschaltzone vor einem Airbagmodul hin bewegenden Kopfes eines Insassen im Immenraum eines Kraftfahrzeuges, betrifft, welche sich durch geeignete Mittel zur Ausführung der Verfahren wie zuvor beschrieben auszeichnet.

Besondere Probleme in Zusammenhang mit der eingangs genannten Gesetzgebungsinitiative FMVSS 208 stellen bekanntermaßen die Validierbarkeit und Reproduzierbarkeit der Kopfpositionsmessungen im Rahmen der Zulassungsverfahren eines Kamerasystems dar. Sowohl hier als auch unter Feldbedingungen kann die vorliegende Erfindung durch Verbesserung der Kopfpositionsbestimmung selbst im Zentimeterbereich entscheidende Vorteile bringen. Indem sie so das Schutzpotential eines Insassen in einem Kraftfahrzeug in vorteilhafter Weise erhöht, eignet sich die vorliegende Erfindung insb. für Insassenschutzsysteme moderner Kraftfahrzeuge.

Die Erfindung wird im Folgenden anhand verschiedener Ausführungsbeispiele und in Verbindung mit der Zeichnung beschrieben.

Darin zeigen schematisch:
- Fig. 1: die Draufsicht eines typischen Einbauortes einer Bilderfassungseinheit im Innenraum eine Kraftfahrzeuges;
- Fig. 2: den Einbauort nach Fig. 1 in einer Seitenansicht;

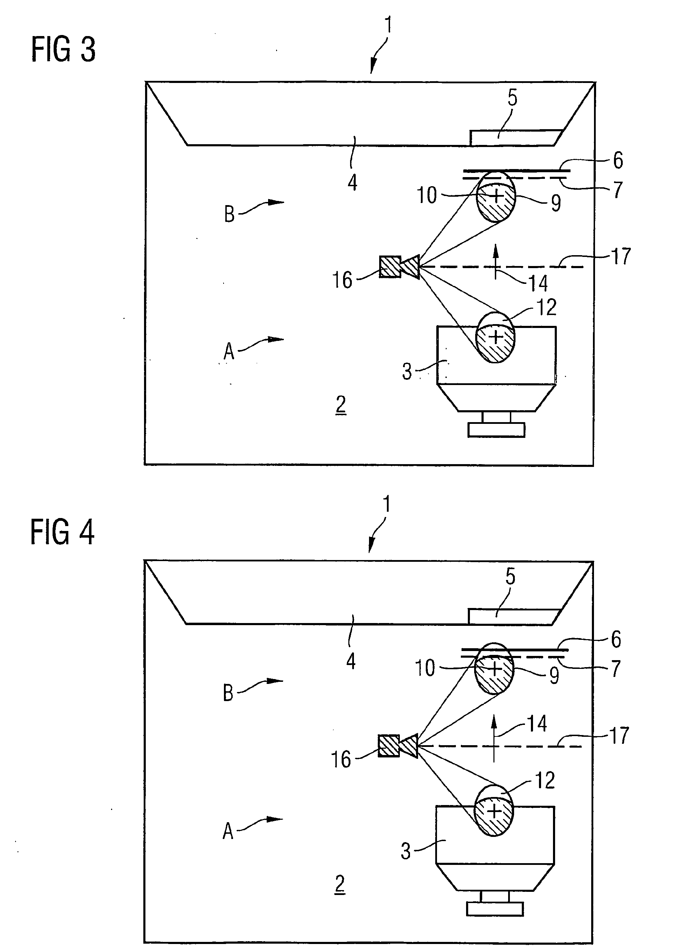

- Fig. 3: die Vermessung von Kopfpositionen eines Insassen unter Annahme mittlerer Kopfgrößen;
- Fig. 4: die fehlerhafte Vermessung bei Zugrundelegung der Annahme nach Fig. 3 von Kopfpositionen eines Insassen mit z.B. ausladender Haarpracht;

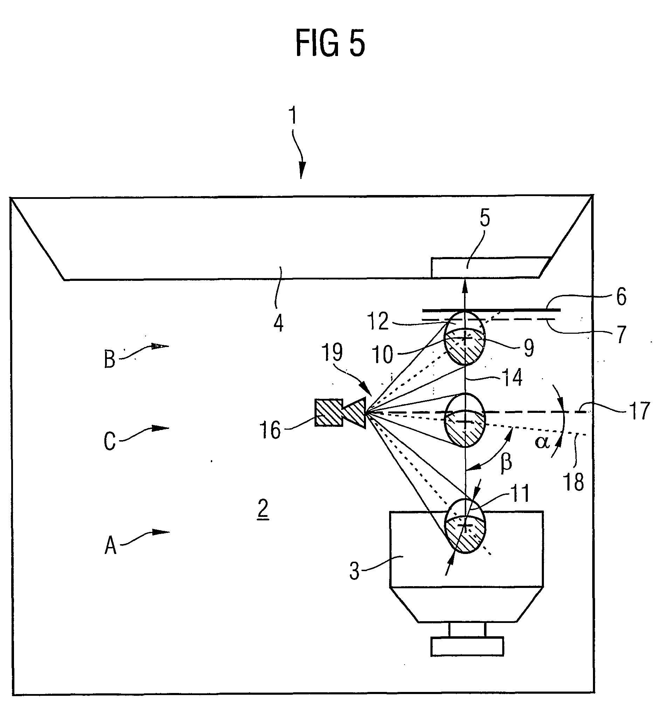

- Fig. 5: ein erstes Ausführungsbeispiel einer Vermessung von Kopfpositionen *nach der Erfindung; und*

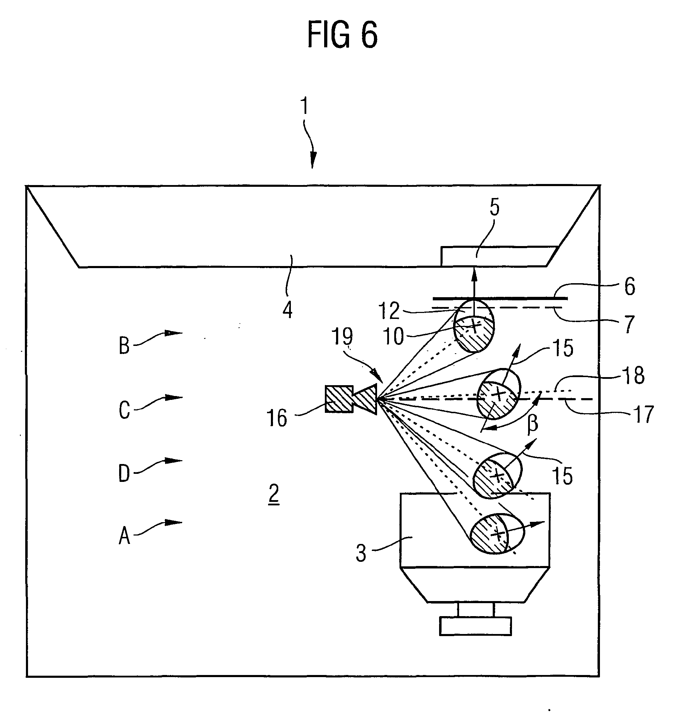

- Fig. 6: ein zweites Ausführungsbeispiel einer Vermessung von Kopfpositionen nach der Erfindung.

Fig. 1 zeigt den typischen Einbauort einer Bilderfassungseinheit 16 im Innenraum 2 eine Kraftfahrzeuges 1 in der Draufsicht.

Fig. 2 zeigt die Darstellung nach Fig. 1 in einer Seitenansicht.

Gewöhnlich ist eine Bilderfassungseinheit 16, beispielsweise eine 3D Kamera, in einem Modul oben im Dachhimmel 20 zwischen den Fahrzeugsitzen 3 eingebaut. Vor den Sitzen 3, typischerweise im Armaturenbrett 4, ist ein Airbagmodul 5 untergebracht. Eine dem Airbag 5 vorgelagerte automatische dynamische COOP-Abschaltzone 6 dient dem gesetzlich vorgeschriebenen Schutz eines Insassen 8 vor Verletzungen durch den Airbag 5 bei Unterschreitung eines Mindestabstandes. Der Vorteil der zuvor beschriebenen Einbauposition 20 der Kamera 16 besteht darin, dass diese 16 unter normalen Umständen nicht leicht verdeckt werden kann, wie beispielsweise durch Zeitung lesende Insassen 8. Nachteilig ist jedoch, dass die Kamera 16 beim Eindringen des Kopfes 9 in die COOP-Zone 6 den dem Airbagmodul 5 zugewandten Teil des Kopfes 9, im Allgemeinen das Gesicht 12, nicht sehen kann. Die Kamera 16 schaut in diesem Fall auf den Hinterkopf des Insassen 9.

Es ist bekannt, dieses Problem durch die Annahme einer mittleren Kopfgröße zu lösen. Diese Annahme ist jedoch bei ausladender Haarpracht, einer Kopfbedeckung oder dergleichen mit nicht unerheblichen Fehlern behaftet. In diesen Fällen trifft die Annahme nicht mehr zu. Somit muss eine der COOP-Zone vorgelagerte Umschaltzone 7 so groß gewählt werden, dass die meisten Szenarien angesichts dieser Unsicherheit abgedeckt werden.

Fig. 3 verdeutlicht diesen Sachverhalt, d.h. die Vermessung von Kopfpositionen eines Insassen 8 unter Annahme mittlerer Kopfgrößen. In Kopfposition A (normal sitzend) sieht die Kamera 16 das Gesicht 12 des Insassen, jedoch nicht die Haare. In Kopfposition B (Gesicht an COOP Bereichsgrenze) schaut die Kamera 16 auf den Hinterkopf des Insassen 8 und sieht nicht mehr das Gesicht 12 sondern die Haare des Insassen 8.

Fig. 4 zeigt die fehlerhafte Vermessung bei Zugrundelegung der Annahme nach Fig. 3. Schon eine geringfügig ausladendere Frisur unter Annahme einer mittleren Kopfgröße kann dazu führen, dass der Kopf 9 in die COOP-Zone 6 eindringt, die Kamera jedoch noch eine Position außerhalb der COOP-Zone 6 ermittelt.

Fig. 5 zeigt ein erstes Ausführungsbeispiel einer Vermessung von Kopfpositionen nach der Erfindung im Prinzip. Dazu wird insb. an Kopfposition C die Größe 11 des Kopfes 9 des Insassen 8 so genau wie möglich ermittelt, bzw. vermessen. Dabei macht die Erfindung von dem Gedanken gebrauch, dass die beste Position für eine diesbezügliche Messung der Punkt im Raum ist, wo die ideale Bewegungsrichtung 14 des Kopfes 9 senkrecht zu einer idealen Blickrichtung 17 der Kamera 16 steht. Die Messung wird bevorzugt dann vorgenommen, wenn das geometrische Zentrum 10 des Kopfes 9 diesen Punkt überstreicht.

Ein beispielsweise in einem Algorithmus implementiertes Verfahren zur Bestimmung der aktuellen Größe 11 des Kopfes 9 kann vorzugsweise wie folgt aussehen:

In dem jeweils aktuellen 3D-Bild wird mit bekannten Methoden der Bildverarbeitung die Position des geometrischen Mittelpunktes 10 des Kopfes 9 gemessen, sowie die scheinbare Größe 11 des Kopfes 9 in Bewegungsrichtung 14.

Die aktuelle Blickrichtung 18 der Kamera 16 wird als ein Vektor definiert, welcher von einer definierten Kameraposition 19, zum Beispiel dem Mittelpunkt der Objektivöffnung, bei einer Stereokamera 16 z. B. das linkes Objektiv, zu der Position des geometrischen Mittelpunktes 10 des Kopfes 9 zeigt.

Den bekannten Methoden der linearen Algebra folgend wird dann ein aktueller Winkel α zwischen der idealen Blickrichtung 17 und den aktuellen Blickrichtungen 18 der 3D-Kamera 16 berechnet. Alternativ oder z.B. als Plausibilitätsscheck auch kumulativ kann ein aktueller Winkel β zwischen der idealen Bewegungsrichtung 14 des Kopfes 9 und den aktuellen Blickrichtungen 18 der Bilderfassungseinheit 16 berecht werden.

Die jeweils aktuellen Werte für Winkel α bzw. β und scheinbarer Kopfgröße 11 werden dann, vorzugsweise in einem Ringbuffer (nicht dargestellt), gespeichert, bei dem immer der älteste Wert durch den aktuellen Wert ersetzt wird. Die Größe des Ringbuffers ist vorzugsweise so dimensioniert, dass mindestens sämtliche Messwerte einer langsamen Kopfbewegung 14 von Kopfposition A bis zu Kopfposition B gespeichert werden können.

Als Kopfgröße wird erfindungsgemäß immer derjenige Wert aus dem aktuellen Ringbuffer angenommen, bei dem der Absolutbetrag der Differenz von Winkel α und 0° bzw. von Winkel β und 90° minimal war.

Fig. 6 zeigt ein zweites Ausführungsbeispiel einer bevorzugten Vermessung von Kopfpositionen nach der Erfindung.

Zunächst wird wiederum im jeweils aktuellen 3D-Bild mit bekannten Methoden der Bildverarbeitung die Position des geometrischen Mittelpunktes 10 des Kopfes 9 gemessen, sowie die scheinbare Größe 11 des Kopfes 9 in Bewegungsrichtung 14.

Ebenso wird die aktuelle Blickrichtung 18 der Kamera 16 als ein Vektor definiert, welcher von einer definierten Kameraposition 19, zum Beispiel der Mittelpunkt der Objektivöffnung, bei einer Stereokamera 16 z. B. das linkes Objektiv, zu der Position des geometrischen Mittelpunktes 10 des Kopfes 9 zeigt.

In Besonderheit zu Fig. 5 werden nunmehr auch die jeweils letzten, d.h. vorhergehenden, Werte für die Position 10 gespeichert, so dass ein tatsächlicher Bewegungsvektor 15 des Kopfes 9 aus der gespeicherten letzten und der aktuellen 3-dimensionalen Kopfposition 10 berechenbar wird.

Den bekannten Methoden der linearen Algebra folgend wird dann der aktuelle Winkel β zwischen dem tatsächlichen Bewegungsvektor 15 des Kopfes 9 und den aktuellen Blickrichtungen 18 der 3D-Kamera 16 berechnet.

Die jeweils aktuellen Werte für Winkel β und scheinbarer Kopfgröße 11 werden dann, wiederum vorzugsweise in einem Ringbuffer (nicht dargestellt), gespeichert, bei dem immer der älteste Wert durch den aktuellen Wert ersetzt wird.

Als Kopfgröße wird immer derjenige Wert aus dem aktuellen Ringbuffer angenommen, bei dem der Absolutbetrag der Differenz von Winkel β und 90° minimal war, d.h. die Geometrie am Besten der Bedingung "senkrecht" entsprach.

Erwähnt sei, dass das die zuvor beschriebenen Verfahren noch durch weitere Maßnahmen stabilisiert werden können. So kann beispielsweise die Kopfbewegung 14 bzw. 15 durch bekannte Filter und Bewegungsmodelle (Kalman-Filter) gefiltert werden.

Die obigen Verfahren können vorteilhaft auch analog auf die Bestimmung des Abstandes des Insassen-Torso 13 zum Airbagmodul 5 angewandt werden. Dabei wird anstelle der Größe 11 des Kopfes 9 die Größe des Torso 13 des Insassen 8 mit Hilfe der 3D-Kamera 16 ermittelt.

Die obigen Verfahrenen können noch weiter ausgebaut werden, indem die verschiedenen Ansichten der Person 8, die sich aufgrund der unterschiedlichen Positionen A, B, C, ... der Person 8 bezüglich der Kamera 16 ergeben, zu einer dreidimensionalen Gesamtansicht der Person 8 kombiniert werden, z. B. Frontalansicht A bei normalsitzender Person zzgl. Seitenansicht C bei Person 8 neben Kamera 16 zzgl. Rückansicht B bei vorgebeugter Person 8.

Für die Kombination der Teilansichten A, B, C, ... der Person 8 können auch sämtliche Teilansichten A, B, C, D, ... herangezogen werden, die bei der Vorwärtsbewegung der Person 8 von der 3D-Kamera 16 aufgenommen und im Ringpuffer zwischengespeichert worden sind.

Wenn sich die Person nahe der COOP-Zone 6 befindet, ist für die 3D-Kamera 16 praktisch nur die Rückseite der Person sichtbar. Die nicht sichtbare Vorderseite 12 der Person 8 kann nun aus der oben ermittelten Gesamtansicht nachgebildet werden und deren Abstand zum Airbagmodul 5 genauer berechnet werden.

Mit der vorliegenden Erfindung ist in vorteilhafter Weise das Schutzpotential eines Insassen 8 in einem Kraftfahrzeug 1 erhöht. Sie eignet sich daher insb. für Insassenschutzsysteme moderner Kraftfahrzeuge 1.

## Patentansprüche

1. Verfahren zur Bestimmung der aktuellen Position (A, B, C, D ...) eines sich auf eine automatische dynamische Abschaltzone (6) vor einem Airbagmodul (5) hin bewegenden Kopfes (9) eines Insassen (8) im Innenraum (2) eines Kraftfahrzeuges (1), unter Verwendung einer Bilderfassungseinheit (16) mit einer idealen Blickrichtung (17), die im wesentlichen senkrecht zu einer idealen Bewegungsrichtung (14) des Insassen (8) verläuft, bei dem
- mittels der Bilderfassungseinheit (16) zumindest zyklisch eine den Insassen (8) umfassende Bildszene im Innenraum (2) des Kraftfahrzeuges (1) aufgenommen und Bildinformationen des Insassen (8) erfasst werden; **dadurch gekennzeichnet, dass**
- im jeweils aktuellen Szenenbild sowohl die Position des geometrischen Mittelpunktes (10) des Kopfes (9) als auch die scheinbare Größe (11) des Kopfes (9) in Bewegungsrichtung (14) ermittelt werden;
- die jeweils aktuellen Blickrichtungen (18) der Bilderfassungseinheit (16) als ein Vektor definiert werden, welche von einer definierten Position (19) der Bilderfassungseinheit (16) zu der jeweils aktuellen Position des geometrischen Mittelpunktes (10) des Kopfes (9) zeigen;
- die jeweils aktuellen Winkel (α) zwischen der idealen Blickrichtung (17) und den aktuellen Blickrichtungen (18) der Bilderfassungseinheit (16) berechnet werden;
- die jeweils aktuellen Werte für Winkel (α) und scheinbare Größe (11) des Kopfes (9) in einem Speicher abgelegt werden;
und bei dem
- als Größe des Kopfes (9) immer derjenige Wert aus dem Speicher angenommen wird, bei dem der Absolutbetrag der Differenz von Winkel (α) und 0° minimal war.

2. Verfahren zur Bestimmung der aktuellen Position (A, B, C, D, ...) eines sich auf eine automatische dynamische Abschaltzone (6) vor einem Airbagmodul (5) hin bewegenden Kopfes (9) eines Insassen (8) im Innenraum (2) eines Kraftfahrzeuges (1), unter Verwendung einer Bilderfassungseinheit (16) mit einer idealen Blickrichtung (17), die im wesentlichen senkrecht zu einer idealen Bewegungsrichtung (14) des Insassen (8) verläuft, bei dem
- mittels der Bilderfassungseinheit (16) zumindest zyklisch eine den Insassen (8) umfassende Bildszene im Innenraum (2) des Kraftfahrzeuges (1) aufgenommen und Bildinformationen des Insassen (8) erfasst werden; **dadurch gekennzeichnet, dass**
- im jeweils aktuellen Szenenbild sowohl die Position des geometrischen Mittelpunktes (10) des Kopfes (9) als auch die scheinbare Größe (11) des Kopfes (9) in Bewegungsrichtung (14) ermittelt werden;
- die jeweils aktuellen Blickrichtungen (18) der Bilderfassungseinheit (16) als ein Vektor definiert werden, welche von einer definierten Position (19) der Bilderfassungseinheit (16) zu der jeweils aktuellen Position des geometrischen Mittelpunktes (10) des Kopfes (9) zeigen;
- die jeweils aktuellen Winkel (β) zwischen der idealen Bewegungsrichtung (14) des Kopfes (9) und den aktuellen Blickrichtungen (18) der Bilderfassungseinheit (16) berechnet werden;
- die jeweils aktuellen Werte für Winkel (β) und scheinbare Größe (11) des Kopfes (9) in einem Speicher abgelegt werden;
und bei dem
- als Größe des Kopfes (9) immer derjenige Wert aus dem Speicher angenommen wird, bei dem der Absolutbetrag der Differenz von Winkel (β) und 90° minimal war.

3. Verfahren nach Anspruch 1 oder 2, bei dem die Bilderfassungseinheit (16) eine 3D-Kamera ist, die nach dem stereoskopischen Verfahren, nach dem Lichtbüschelverfahren, nach dem Time-of-Flight-Verfahren oder einem anderen gleichermaßen geeigneten Verfahren arbeitet.

4. Verfahren nach Anspruch 2 und 3, bei dem, anstatt von der idealen Bewegungsrichtung (14) des Kopfes (9) ausgehend,
- die jeweils aktuellen Winkel (β) zwischen aktuellen tatsächlichen Bewegungsvektoren (15) des Kopfes (9) und den aktuellen Blickrichtungen (18) der Bilderfassungseinheit (16) berechnet werden.

5. Verfahren nach Anspruch 4, bei dem der jeweils letzte Wert für die Position des geometrischen Mittelpunktes (10) des Kopfes (9) gespeichert und der jeweils aktuelle Bewegungsvektor (15) aus der gespeicherten letzten und der aktuellen 3-dimensionalen Position des Kopfes (9) berechnet werden.

6. Verfahren nach einem der vorherigen Ansprüche, bei dem der definierten Position (19) der Bilderfassungseinheit (16) der Mittelpunkt einer Objektivöffnung der Bilderfassungseinheit (16), im Fall der Stereo-Kamera beispielsweise das linke Objektiv, zugrunde gelegt wird.

7. Verfahren nach einem der vorherigen Ansprüche, bei dem die Bilderfassungseinheit (16) kontinuierlich Bilder der interessierenden Szene aufnimmt, zumindest wenigstens 25 Bilder pro Sekunde, insbesondere wenigstens 30 Bilder pro Sekunde, vorzugsweise wenigstens 35 Bilder pro Sekunde.

8. Verfahren nach einem der vorherigen Ansprüche, bei dem die Größe des Speichers so dimensioniert ist, dass zumindest sämtliche Messwerte einer langsamen Kopfbewegung von einer ersten Kopfposition (A) bis zur interessierenden zweiten Kopfposition (B) gespeichert werden können.

9. Verfahren nach einem der vorherigen Ansprüche, bei dem der Speicher ein Ringpuffer ist, welcher zunächst gefüllt und ab dann immer der älteste Wert durch den aktuellen Wert ersetzt wird.

10. Verfahren nach einem der vorherigen Ansprüche, bei dem die Aufnahmen der Kopfbewegung (14 bzw. 15) durch Filter und/oder Bewegungsmodelle gefiltert wird.

11. Verfahren nach einem der vorherigen Ansprüche, bei dem anstelle der Größe (11) des Kopfes (9) die Größe des Torsos (13) oder die Größe eines anderen Körperteils des Insassen (8) im Kraftfahrzeug (1) mit der Bilderfassungseinheit (16) ermittelt wird.

12. Verfahren nach einem der vorherigen Ansprüche, bei dem verschiedene Ansichten des Insassen (8) zu einer 3D-Gesamtansicht der Person (8) kombiniert werden.

13. Verfahren nach Anspruch 11, bei dem die Vorderseite des Insassen (8), insbesondere dessen Gesichtsprofil (12), aus der Gesamtansicht nachgebildet und deren Abstand zur Umschaltzone (6) bzw. zum Airbagmodul (5) berechnet wird.

14. Vorrichtung zur Bestimmung der aktuellen Position (A, B, C, D, ...) eines sich auf eine automatische dynamische Abschaltzone (6) vor einem Airbagmodul (5) hin bewegenden Kopfes (9) eines Insassen (8) im Immenraum (2) eines Kraftfahrzeuges (1), **gekennzeichnet durch** geeignete Mittel zur Ausführung der Verfahren nach einem der vorherigen Ansprüche.

## Claims

1. Method for determining the current position (A, B, C, D ...) of a head (9) of an occupant (8) in the passenger compartment (2) of a motor vehicle (1), said head (9) moving toward an automatic dynamic disabling zone (6) in front of an airbag module (5), using an image acquisition unit (16) with an ideal line of sight (17), which is essentially perpendicular to an ideal direction of movement (14) of the occupant (8), in which
- an image scenario in the passenger compartment (2) of the motor vehicle (1) including the occupant (8) is recorded at least cyclically using the image acquisition unit (16) and image information relating to the occupant (8) is detected, **characterised in that**,
- both the position of the geometric centre (10) of the head (9) and the apparent size (11) of the head (9) are determined in the direction of movement (14) in the respective current scenario image;
- the respective current lines of sight (18) of the image acquisition unit (16) are defined as a vector, from a defined position (19) of the image acquisition unit (16) to the respective current position of the geometric centre (10) of the head (9);
- the respective current angles (α) between the ideal line of sight (17) and the current lines of sight (18) of the image acquisition unit (16) are calculated;
- the respective current values for angles (α) and apparent size (11) of the head (9) are stored in a storage unit;
and in which
- the value from the storage unit for which the absolute sum of the difference between angle (α) and 0° was minimal is always assumed to be the size of the head (9).

2. Method for determining the current position (A, B, C, D ...) of a head (9) of an occupant (8) in the passenger compartment (2) of a motor vehicle (1), said head (9) moving toward an automatic dynamic disabling zone (6) in front of an airbag module (5), using an image acquisition unit (16) with an ideal line of sight (17), which is essentially perpendicular to an ideal direction of movement (14) of the occupant (8), in which
- an image scenario in the passenger compartment (2) of the motor vehicle (1) including the occupant (8) is recorded at least cyclically using the image acquisition unit (16) and image information relating to the occupant (8) is detected, **characterised in that**,
- both the position of the geometric centre (10) of the head (9) and also the apparent size (11) of the head (9) are determined in the direction of movement (14) in the respective current scenario image;
- the respective current lines of sight (18) of the image acquisition unit (16) are defined as a vector, from a defined position (19) of the image acquisition unit (16) to the respective current position of the geometric centre (10) of the head (9);
- the respective current angles (β) between the ideal direction of movement (14) of the head (9) and the current lines of sight (18) of the image acquisition unit (16) are calculated;
- the respective current values for angles (β) and apparent size (11) of the head (9) are stored in a storage unit; and in which
- the value from the storage unit for which the absolute sum of the difference between angle (β) and 90° was minimal is always assumed to be the size of the head (9).

3. Method according to claim 1 or 2,
in which the image acquisition unit (16) is a 3D camera, which operates according to the stereoscopic method, according to the pencil of light method, according to the time of flight method or another equally appropriate method.

4. Method according to claim 2 and 3,
in which, instead of being based on the ideal direction of movement (14) of the head (9),
- the respective current angles (β) between current actual movement vectors (15) of the head (9) and the current lines of sight (18) of the image acquisition unit (16) are calculated.

5. Method according to claim 4,
in which the respective last value for the position of the geometric centre (10) of the head (9) is stored and the respective current movement vector (15) is calculated from the stored last and the current 3-dimensional positions of the head (9).

6. Method according to one of the preceding claims,
in which the defined position (19) of the image acquisition unit (16) is based on the centre of a lens aperture of the image acquisition unit (16), in the case of a stereo camera for example the left lens.

7. Method according to one of the preceding claims,
in which the image acquisition unit (16) continuously records images of the relevant scenario, at least 25 images per second, in particular at least 30 images per second, preferably at least 35 images per second.

8. Method according to one of the preceding claims,
in which the size of the storage unit is dimensioned such that at least all the measured values of a slow head movement from a first head position (A) to the relevant second head position (B) can be stored.

9. Method according to one of the preceding claims,
in which the storage unit is a ring buffer store, which is first filled and from then on the oldest value is always replaced by the current value.

10. Method according to one of the preceding claims,
in which the recordings of the head movement (14 or 15) are filtered by means of filters and/or movement models.

11. Method according to one of the preceding claims,
in which the size of the torso (13) or the size of another part of the body of the occupant (8) in the motor vehicle (1) is determined using the image acquisition unit (16) instead of the size (11) of the head (9).

12. Method according to one of the preceding claims,
in which different views of the occupant (8) are combined to form a 3D overall view of the person (8).

13. Method according to claim 11,
in which the front of the occupant (8), in particular said occupant's facial profile (12), is simulated from the overall view and its distance calculated from the switch zone (6) or the airbag module (5).

14. Device for determining the current position (A, B, C, D ...) of a head (9) of an occupant (8) in the passenger compartment (2) of a motor vehicle (1), said head (9) moving toward an automatic dynamic disabling zone (6) in front of an airbag module (5), **characterized by** appropriate means for carrying out the method according to one of the preceding claims.

## Revendications

1. Procédé pour déterminer la position actuelle (A, B, C, D, ...) d'une tête (9), se déplaçant en direction d'une zone de déconnexion (6) dynamique automatique avant un module d'airbag (5), d'un passager (8) dans l'habitacle (2) d'un véhicule (1), avec l'utilisation d'une unité d'enregistrement d'image (16) avec une direction de visée (17) idéale, qui est disposée sensiblement perpendiculairement à une direction de déplacement (14) idéale du passager (8) dans lequel
- une scène d'image comprenant le passager (8) dans l'habitacle (2) du véhicule est enregistrée de façon au moins cyclique au moyen de l'unité d'enregistrement d'image (16) et des informations en image du passager (8) sont saisies, **caractérisé en ce que**
- dans l'image de scène respectivement actuelle aussi bien la position du centre (10) géométrique de la tête (9) que la grandeur (11) apparente de la tête (9) sont déterminées dans la direction de déplacement (14) ;
- les directions de visée (18) respectivement actuelles de l'unité d'enregistrement d'image (16) sont définies comme un vecteur, lesquelles sont dirigées depuis une position (19) définie de l'unité d'enregistrement d'image (16) vers la position respectivement actuelle du centre (10) géométrique de la tête (9),
- les angles (α) respectivement actuels entre la direction de visée (17) et les directions de visée (18) actuelles de l'unité d'enregistrement d'image (16) sont calculés ;
- les valeurs respectivement actuelles pour l'angle (α) et la grandeur (11) apparente de la tête (9) sont déposées dans une mémoire ;
et dans lequel,
- comme grandeur de la tête (9), on admet toujours la valeur provenant de la mémoire dans laquelle la valeur absolue de la différence entre l'angle (α) et 0° était minimale.

2. Procédé pour déterminer la position (A, B, C, D, ...) actuelle d'une tête (9), se déplaçant en direction d'une zone de déconnexion (6) dynamique automatique avant un module d'airbag (5), d'un passager (8) dans l'habitacle (2) d'un véhicule (1), avec l'utilisation d'une unité d'enregistrement d'image (16) avec une direction de visée (17) idéale, qui est disposée sensiblement perpendiculairement à une direction de déplacement (14) idéale du passager (8), dans lequel
- une scène d'image comprenant le passager (8) dans l'habitacle (2) du véhicule (1) est enregistrée au moins de façon cyclique au moyen de l'unité d'enregistrement d'image (16) et des informations en image du passager (8) sont saisies,
**caractérisé en ce que**
- dans l'image de scène respectivement actuelle, aussi bien la position du centre (10) géométrique de la tête (9) que la grandeur (11) apparente de la tête (9) sont déterminées dans la direction de déplacement (14) ;
- les directions de visée (18) respectivement actuelles de l'unité d'enregistrement d'image (16) sont définies comme un vecteur, lesquelles sont dirigées depuis une position (19) définie de l'unité d'enregistrement d'image (16) vers la position respectivement actuelle du centre (10) géométrique de la tête (9),
- les angles (β) respectivement actuels entre la direction de mouvement (14) idéale de la tête (9) et les directions de visée (18) actuelles de l'unité d'enregistrement d'image (16) sont calculés ;
- les valeurs respectivement actuelles pour l'angle (β) et la grandeur (11) apparente de la tête (9) sont déposées dans une mémoire
et dans lequel
- comme grandeur de tête (9), on prend toujours la valeur provenant de la mémoire, dans laquelle la valeur absolue de la différence entre l'angle (β) et 90° était minimale.

3. Procédé selon la revendication 1 ou 2, dans lequel l'unité d'enregistrement d'image (16) est une caméra stéréo, qui travaille selon le procédé stéréoscopique, selon le procédé d'aigrette lumineuse, selon le procédé Time-Of-Flight ou selon un autre procédé approprié de la même façon.

4. Procédé selon les revendications 2 et 3, dans lequel, à partir de la direction de déplacement (14) idéale de la tête (9),
- les angles (β) respectivement actuels entre les vecteurs de mouvement (15) réels actuels de la tête (9) et les directions de visée (18) actuelles de l'unité d'enregistrement d'image (16) sont calculés.

5. Procédé selon la revendication 4, dans lequel la respectivement dernière valeur pour la position du centre (10) géométrique de la tête (9) est mémorisée et le vecteur de déplacement (15) respectivement actuel est calculé à partir de la dernière position mémorisée et de la position en 3D actuelle de la tête (9).

6. Procédé selon l'une quelconque des revendications précédentes, dans lequel le centre d'une ouverture d'objectif de l'unité d'enregistrement d'image (16), dans le cas de l'appareil stéréo par exemple l'objectif gauche, est pris pour base de la position (19) définie de l'unité d'enregistrement d'images (16).

7. Procédé selon l'une quelconque des revendications précédentes, dans lequel l'unité d'enregistrement d'images (16) enregistre de façon continue des images de la scène intéressante, tout du moins au moins 25 images par seconde, en particulier au moins 30 images par seconde, de préférence au moins 35 images par seconde.

8. Procédé selon l'une quelconque des revendications précédentes, dans lequel la grandeur de la mémoire est dimensionnée de telle sorte qu'au moins toutes les valeurs mesurées d'un mouvement de tête lent depuis une première position de la tête (A) jusqu'à la seconde position de la tête (B) intéressante peuvent être stockées.

9. Procédé selon l'une quelconque des revendications précédentes, dans lequel la mémoire est un tampon annulaire, qui est d'abord rempli et à partir de là la valeur la plus ancienne est toujours remplacée par la valeur actuelle.

10. Procédé selon l'une quelconque des revendications précédentes, dans lequel les prises de vue du mouvement de tête (14 ou 15) sont filtrées par des filtres et/ou modèles de déplacement.

11. Procédé selon l'une quelconque des revendications précédentes, dans lequel, au lieu de la grandeur (11) de la tête (9), la grandeur du torse (13) ou la grandeur d'une autre partie du corps du passager (8) est déterminée dans le véhicule (1) avec l'unité d'enregistrement d' image (16).

12. Procédé selon l'une quelconque des revendications précédentes, dans lequel différentes vues du passager (8) sont combinées pour former une vue globale en 3D de la personne (8).

13. Procédé selon la revendication 11, dans lequel le côté avant du passager (8), en particulier son profil de visage (12), est reproduit à partir de la vue globale et sa distance à la zone d'inversion (6) ou au module d'airbag (5) est calculée.

14. Dispositif pour déterminer la position (A, B, C, D,...) actuelle d'une tête (9), se déplaçant en direction d'une zone de déconnexion (6) dynamique automatique avant un module d'airbag (5), d'un passager (8) dans l'habitacle (2) d'un véhicule (1), **caractérisé par** des moyens appropriés pour la mise en oeuvre des procédés selon l'une quelconque des revendications précédentes.
